# EUROPEAN PATENT SPECIFICATION

(11) **EP 0 567 176 B1**
(45) Date of publication and mention of the grant of the patent: **20.03.1996**
(21) Application number: 93200881.6
(22) Date of filing: 27.03.1993
(51) Int. Cl.: H04N 1/21, H04N 1/387

(54) **Radiation image displaying method and apparatus**
Methode und Vorrichtung zur Anzeige von Strahlungsbildern
Méthode et appareil pour affichage d'image irradiée

(30) Priority: 21.04.1992 EP 92201106
(43) Date of publication of application: 27.10.1993
(73) Proprietor: AGFA-GEVAERT naamloze vennootschap, B-2640 Mortsel (BE)
(72) Inventor: Janssens, Danny, c/o Agfa-Gevaert N.V., B-2640 Mortsel (BE); Schoeters, Emile, c/o Agfa-Gevaert N.V., B-2640 Mortsel (BE); Vuylsteke, Pieter, c/o Agfa-Gevaert N.V., B-2640 Mortsel (BE); Dhaenens, Frans, c/o Agfa-Gevaert N.V., B-2640 Mortsel (BE)

(56) References cited:
- EP-A- 0 258 976
- US-A- 4 680 643
- US-A- 5 015 854
- US-A- 5 027 110
- PATENT ABSTRACTS OF JAPAN vol. 8, no. 278 (P-322)19 December 1984 & JP-A-59 143 147
- PATENT ABSTRACTS OF JAPAN vol. 8, no. 97 (P-272)8 May 1984 & JP-A-59 010 838
- PATENT ABSTRACTS OF JAPAN vol. 15, no. 460 (P-1278)21 November 1991 & JP-A-31 96 014

## Description

### Field of the invention.

The present invention is in the field of digital radiography. The invention more specifically relates to a method and an apparatus for displaying (a) radiologic image(s).

### Background of the invention

In the field of digital radiography a wide variety of image acquisition techniques have been developed such as computerised tomography, nuclear magnetic resonance, ultrasound, detection of a radiation image by means of a CCD sensor or a video camera, radiographic film scanning etc.

Still another technique has been developed wherein a radiation image, for example x-rays transmitted by an object, is stored in a screen comprising a photostimulable phosphor such as one of the phosphors described in European patent application EP-A-0 503 702 published 16.09.92 and in US Ser. 07/842,603 (US-A-5 340 661, published 23.08.94).

The technique for reading out the stored radiation image consists of scanning the screen with stimulating radiation, such as laser light of the appropriate wavelength, detecting the light emitted upon stimulation and converting the emitted light into an electric representation for example by means of a photomultiplier. This technique further comprises digitizing and processing said electric signal and applying it to a recorder for recording a hard copy for example on film. This hard-copy can be viewed on a lightbox for diagnosic purposes.

After read-out of the image stored in the photostimulable phosphor screen one disposes of an electric image representation that can be applied to a monitor for display of the corresponding visual image.

Apparatus for performing the above-described image acquisition methods are commonly accompanied by a preview monitor to which the image signal is applied before being sent to an output device, i.e. a recorder or a workstation.

The image can be then be evaluated either on the recorded hard-copy or on the display unit of the workstation or on the preview monitor.

However, before the image is available at the output of the hard copy recorder, some time passes due to the duration of the recording process including the development of the film and occacionally due to formation of a queue of image signals waiting to be reproduced by the recorder.

Also when the image is shown and evaluated at the workstation some processing time is to be taken into account before the visible image is available.

Inspection on the preview monitor on the other hand can be performed almost immediately after acquisition and hence provides for early feedback to the operator so that corrections can be performed in case the acquisition went wrong.

Sequentially acquired images are sequentially shown on the monitor(s). This mode of operation allows fast evaluation but has the disadvantage that the period of time of which the operator disposes to make an evaluation depends on the period of time between the display of a first image and the moment on which data regarding a subsequent image are available. Typically this is for example in a system wherein an image is read-out from a photostimulable phosphor screen about 1 minute. So, it may happen that an image is already removed from the display and a subsequent image is displayed while the operator did not yet have the opportunity to evaluate the former image on the display unit.

This problem is partially solved by providing the acquisition apparatus with an interaction modality for example implemented by a wait, cancel and proceed function. Upon activation of the wait function for example in a system wherein images are stored in photostimulable phosphor screens, the operator can interrupt the process of successively reading out a sequence of phosphor screens so that he can study and evaluate a read out image on the preview monitor until he activates the cancel or proceed function.

Upon activation of the proceed function the acquired image signal is sent further to the output device whereas upon activation of the cancel function, the image signal is no longer retained. After activation of either of these functions, the interruption is terminated and the acquisition apparatus starts acquiring a next image.

By using these functions the operator can dispose of a longer period of time to make a first evaluation on the preview monitor. However, this procedure decreases the throughput of the read-out apparatus.

US patent US-A-5,015.854 issued May 14, 1991 discloses a configuration of a workstation (not preview monitor) to be interfaced with a signal gathering apparatus.

The disclosure deals in particular with the retrieval of particular images out of said large number of images stored in a storage device.

The retrieval is performed with the aid of outline images.

When a stored image is to be retrieved by the operator of the workstation, a number of outline images is displayed simultaneously on the display device so that the operator can select the image of interest on the basis of low detailed pictorial information displayed on the monitor screen. On the basis of this selection he can order display of the complete non-reduced image.

This method is generally referred to as "pictorial index" and has been described extensively by Th. Wendler et al. in Pictorial Information Systems in Medicine, published in Nato ASI Series, Vol. F19.

US patent US-A-5,027,110 issued June 25, 1991 relates to a picture archiving and communication system provided with a number of display devices that can simultaneously display all of the images of a series of related images.

Typically the number and the resolution of the images in a series exceeds the capacity of the display units. Consequentially, only a small number of images may be simultaneously displayed on the display units.

To deal with this, the display arrangement spatially reduces each image of the series so that all of them may be simultaneously displayed on the display units.

In European patent application EP-A-0 527 525 filed 14.08.91 and published on 22.02.93, a contrast enhancing method is disclosed which comprises the steps of receiving an original digital image represented by an array of pixel values, processing said original image and recording the processed image on a recording medium or visualising it on a display monitor, said processing comprising the steps of
a) decomposing said original image into a sequence of detail images at multiple resolution levels and a residual image at a resolution lower than the minimum of said multiple resolution levels,
b) modifying the pixel values of said detail images to yield pixel values of a set of modified detail images by means of at least one non-linear monotonically increasing odd mapping function with a slope that gradually decreases with increasing argument values and
c)computing said processed image by applying a reconstruction algorithm to the modified detail images and the residual image, the reconstruction algorithm being such that when applied to the detail images and the residual image said original image or a close approximation thereof would be obtained.

### Objects of the invention

It is an object of the invention to provide a display system that enables quasi immediate evaluation of an image after image acquisition and still gives the operator a reasonable amount of time to make an evaluation on the basis of this display without retarding the operation and the throughput of the acquisition apparatus.

It is a further object to provide a display system wherein the image quality of the displayed image is such that the displayed image is sufficiently similar to the final image to allow image evaluation.

It is still a further object to provide such a display system to be used in connection with an image acquisition system wherein a radiation image that was stored in a photostimulable phosphor screen is read-out by scanning said screen with stimulating radiation, detecting the light emitted upon stimulation and converting the detected light into a digital signal representation.

Further objects will become apparent from the description hereinafter.

### Summary of the invention

The objects of the present invention are achieved by a method of displaying on a display device a number of radiation images, each being represented by a digital signal representation, by deducing reduced image signals from the digital signal representations of said radiation images, and by forming a composed signal representing a mosaic type image by means of said reduced image signals and by applying said composed signal to said display device, characterised in that
i) a reduced image signal is obtained by
   - decomposing a digital signal representation of an image into a sequence of detail images at multiple resolution levels and a residual image at a resolution lower than the minimum of said multiple resolution levels,
   - modifying pixel values of said detail images to yield pixel values of a set of modified detail images by means of at least one non-linear monotonically increasing odd mapping function with a slope that gradually decreases with increasing argument values and
   - computing a processed image by applying a reconstruction algorithm to the modified detail images up to an intermediate level of said multiple resolution levels and to the residual image, the reconstruction algorithm being such that when applied to the unmodified detail images and the residual image said original image or a close approximation thereof would be obtained, and
ii) as a new reduced signal is deduced, said composed signal is amended by means of said new reduced signal so that at least one of the images of the mosaic type image is replaced by an image represented by said new reduced signal.

By the term "mosaic-type" image is meant an image composed of a two-dimensional array of individually distinguishable images that together cover the entire addressable area of a display device. Such-like "mosaic-type images" can be compared with the mosaic-type image that is used in television broadcasting, wherein an image is displayed that is composed of an array of smaller images each showing the program broadcasted on a particular channel.

The number of reduced images (represented by the above-defined reduced signals) that together compose a mosaic type image depends on the number of addressable pixels in the display device and on the number of pixels in each of the reduced images.

In one embodiment the radiation image is stored in a photostimulable phosphor screen and the digital signal representation of said radiation image is obtained by scanning said screen with stimulating radiation, detetcing the light emitted upon stimulation and converting the detected light into a digital signal.

In the following the invention will be explained with reference to such an image acquisition system. It will be clear that this invention is not limited to this kind of image acquisition system and that alternatives may be envisioned.

In a specific embodiment of the invention the original image is decomposed into a so-called pyramidal sequence of detail images, i.e. successively formed detail images in the set of multiresolution detail images have a reduced number of pixels.

For example, the multiresolution representation after decomposition may have a pyramidal structure such that the resolution level of the detail images differs by a factor of 2, and the detail images at each resolution level are calculated by filtering the original image with the difference of two low-pass filters and by subsampling the resulting image by a factor 2.

The used filter preferably has a two dimensional Gaussian distribution.

This procedure can be implemented as follows. The original image is filtered by means of a low pass filter as described above, and subsampled by a factor of two, which is implemented by computing the resulting low resolution approximation image g¹ only at every other pixel position of every alternate row.

A detail image b₀ at the finest level is obtained by interpolating the low resolution approximation g₁ with doubling of the number of rows and columns, and pixelwise subtracting the interpolated image from the original image.

The interpolation is effectuated by an interpolator, which inserts a column of zero values every other column, and a row of zero values every other row respectively, and next convolves the extended image with a low pass filter. The subtraction is done by an adder. The same process is repeated on the low resolution approximation g₁ instead of the original image, yielding an approximation of still lower resolution g₂ and a detail image b₁.

A sequence of detail images bᵢ, i = 0..L-1 and a residual low resolution approximation g_{L} are obtained by iterating the above process L times.

The finest detail image b₀ has the same size as the original image. The next coarser detail image b₁ has only half as many rows and columns as the first detail image b₀. At each step of the iteration the maximal spatial frequency of the resulting detail image is only half that of the previous finer detail image, and also the number of columns and rows is halved, in accordance with the Nyquist criterion. After the last iteration a residual image g_{L} is left which can be considered to be a very low resolution approximation of the original image. In the extreme case it consists of only 1 pixel which represents the average value of the original image.

According to the image processing method described in the above mentioned European application EP-A-0 527 525 the pixel values of said detail images are modified to yield pixel values of a set of modified detail images. Preferably, the modification is performed according to at least one non-linear monotonically increasing odd mapping function with a slope that gradually decreases with increasing argument values.

Finally a processed image is computed by applying a reconstruction algorithm to the residual image and the modified detail images. The above mentioned European application EP-A-0 527 525 describes such-like reconstruction algorithms.

In one embodiment of such a reconstruction algorithm the residual image is first interpolated by interpolator to twice its original size and the interpolated image is next pixelwise added to the detail image of the coarsest level b'_{L-1}, using an adder. The resulting image is interpolated and added to the next finer detail image. If this process is iterated L times using the unmodified detail images b_{L-1}...b₀ then an image equal to the original image will result. If at the other hand the detail images are modified before reconstruction, then a processed image, for example a contrast enhanced image will result. The interpolators are identical to those used in the decomposition section.

The reduced image used for the composition of the mosaic type image consist of an image generated during the reconstruction process, said reconstruction process being limited up to some intermediate resolution level which is lower than the original resolution.

The above described embodiment is advantageous because the reduced images have been subjected to image processing and have an enhanced image quality, thereby providing that a radiologist can already make a first evaluation on a processed low resolution image.

According to the present invention the mosaic type image representing signal is amended each time a new reduced image signal is available so that at least one of the reduced images in the displayed mosaic-type image is replaced by the image corresponding with said new reduced signal.

The position of the replacement image in the mosaic type image can be selected.

It is preferred that the reduced image component of the mosaic type image, that was first available for the composition of the mosaic type image is replaced by the new image since the former was visible on the screen during the longest period of time. However, this is not essential of the present invention, it is merely a matter of design choice and alternative embodiments might be implemented.

Also for the component images in the mosaic type image that are not overwritten alternative embodiments are possible.

The method can be implemented so that when a new reduced image becomes available, the reduced image represented by the reduced image signal that was first available is overwritten and that the location of the other component images remains unchanged.

Alternatively the new reduced image may come in the place of the reduced image represented by the former reduced image signal. Then the image corresponding with the reduced signal component that was first available may be dropped and the other images may be shifted in a predetermined order to cover the locations in the mosaic image therein between.

An apparatus by means of which the present invention can be executed comprises
- means for deducing a reduced image signal from said digital signal,
- means for forming a composed signal representing a mosaic type image by means of a number of said reduced image signals,
- a display device to which said composed signal is applied,
- control means providing that when a new reduced image signal is deduced, a new composed signal is formed so that at least one of the component images in the mosaic-type image is replaced by the image represented by the new reduced signal and that said new composed signal is fed to said display device.

Said control means may comprise a serial memory capable of storing at last said N reduced image signals, clock signal generating means for timing the read-out of said serial memory at regular intervals and for timing the application of the read-out signals into said means for forming the composed signal.

In a particular embodiment said radiation image is stored in a photostimulable phosphor screen, and a digital signal representation of said image is obtained by an image acquisiiton apparatus comprising
- means for scanning a photostimulable screen wherein a radiation image is stored with stimulating irradiation,
- means for detecting the light emitted upon stimulation and
- means for converting said detected light into a digital signal.

In the above described embodiments the display apparatus can additionally be provided with means for selecting either display of a single non-reduced image or display of a mosaic type image.

### Brief description of the drawings

Particular aspects of the present invention as well as preferred embodiments thereof will be explained by means of the corresponding drawings wherein
Fig. 1 generally shows a system for reading out an image stored in a photostimulable phosphor screen,
Fig. 2 is a block scheme illustrating the data flow,
Fig. 3 is a scheme illustrating particular aspects of the present invention,
Fig. 4 shows a mosaic-type image.

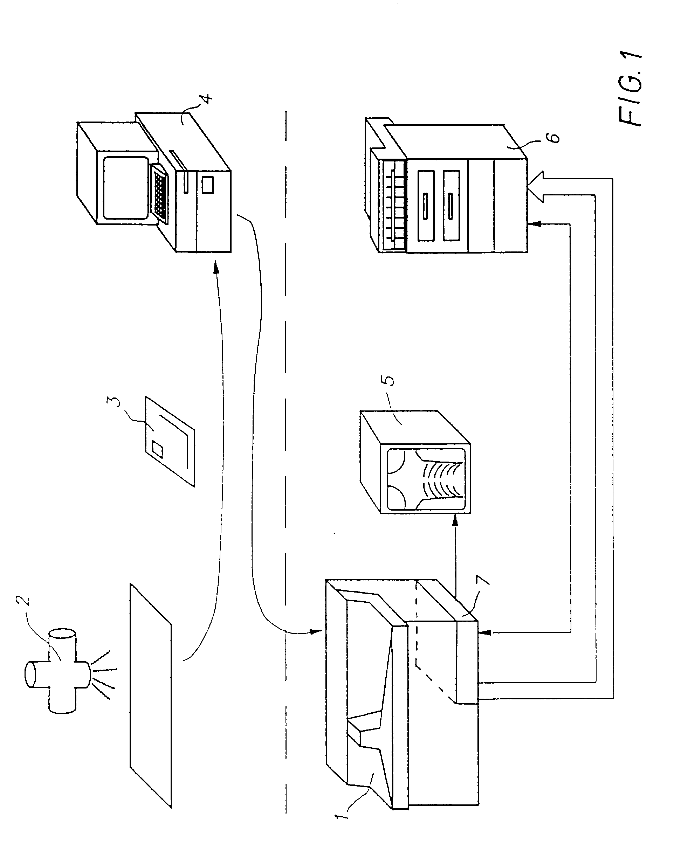

Figure 1 generally shows an apparatus in which the method of the invention can be applied.

A radiation image of an object was recorded on a photostimulable phosphor screen (3) by exposing (2) said screen to x-rays transmitted through the object (not shown). The stimulable phosphor screen was conveyed in a cassette (3) provided with an electrically erasable programmable read only memory (EEPROM). In an identification station 4 various kinds of data, for example patient identification data (name, date of birth) and data relating to the exposure and/or to the signal processing were written into the EEPROM.

In a radiation image read-out apparatus 1 the image stored in the photostimulable phosphor screen was read-out by scanning the phosphor screen with stimulating rays emitted by a laser. The stimulating rays were deflected into the main scanning direction by means of galvanometric deflection. The subscanning was performed by transporting the phosphor screen in the subscanning direction. The stimulated emission was directed onto a photomultiplier for conversion into an electrical image representation. Additionally the information stored in the EEPROM was read.

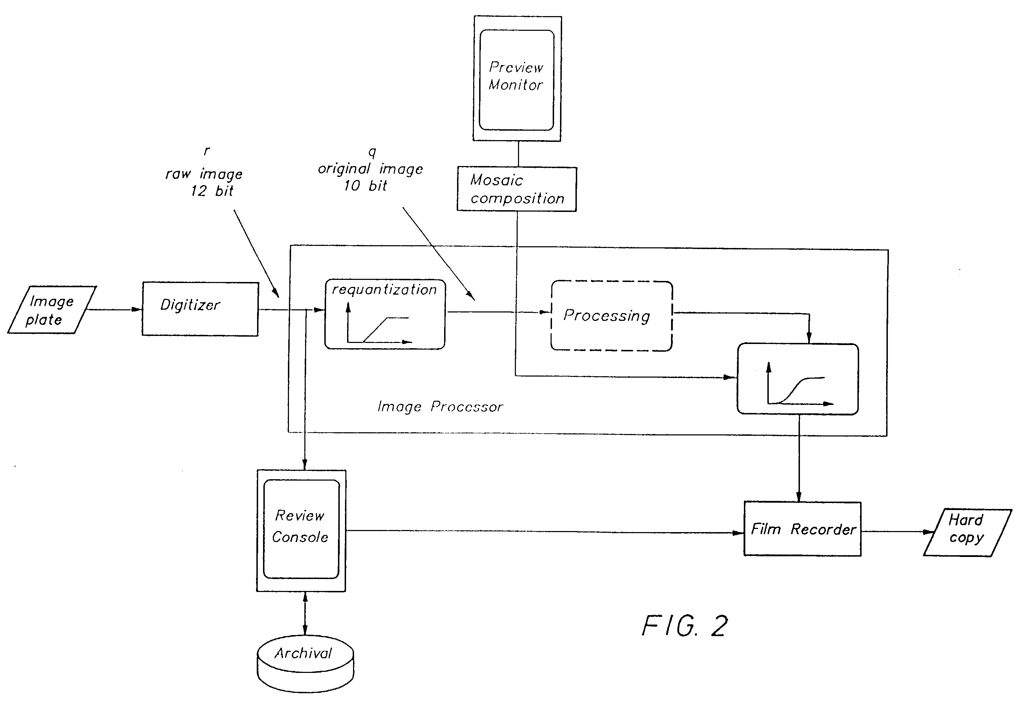

The subsequent data flow is illustrated in figure 2. The output signal of the photomultiplier was converted into a logaritmic quantity log E (E being the exposure value),and next the signal was quantised. This quantised image signal, called the raw image signal, was sent to the image processing module of the read-out apparatus (figure 1, numeral 7) where it was stored in an internal buffer.

From the image processor the image was sent to the preview monitor (figure 1, numeral 5).

Without any modifications it was also sent from the image processor to an image workstation where it was temporarily stored on a hard disc. This back up ensured that the signal was never lost, even not when any of the components of the apparatus would fail and that the signal could be retrieved for any kind of later processing, for example processing with different parameter setting. This feature could be used when the result of the on-line processing was unsatisfactory due to bad exposure conditions or inadequate selection of the processing parameters.

The latitude of the raw image is normally too large to be printed on film or to be displayed on a monitor. Therefore the latitude was confined to the diagnostically relevant region (requantization). The result hereof returned a 10 bit image, representing an image proportional to log exposure, where the grey levels below and above the diagnostically relevant region were clipped to zero and 1023 respectively.

Then the signal was fed to a circuit for forming a composed signal representing a mosaic type image, the output signal of this circuit was further applied to the frame buffer of the preview monitor for display.

It was also possible to display a single non-composed image.

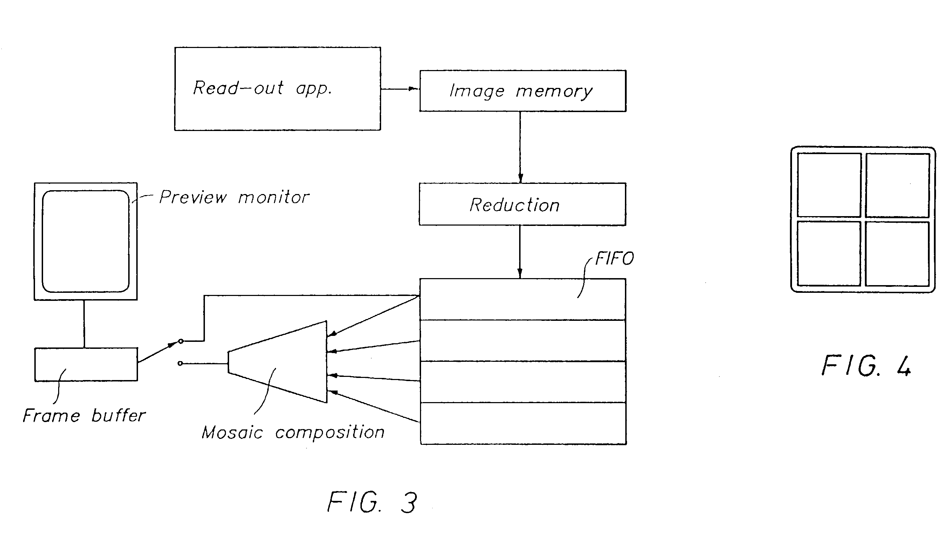

The composition of the mosaic type representing signal is explained with reference to figure 3.

The number of pixels read-out by the apparatus in the present application was 2048 pixels per line multipied by 2048 lines per image, the number of lines that is scanned being a function of the format of the screen in wherein the image was stored.

A reduced signal was extracted from the image signal by subsampling. The number of pixels was reduced by a factor 16 to 512x512 pixels.

Then the reduced signal was written into a first in, first out memory comprising 4 memory locations.

The above-described procedure was repeated under control of appropriate control and clock signals (not indicated in the figure) for subsequently read-out image signals so that the fifo was completely filled.

Next the fifo was read-out and the read-out signals were fed into a subsampling ciruit wherein each second pixel was retained. By means of the resulting signals, a mosaic type image as shown in figure 4 was composed of 4 individually recognizable images corresponding with the subsampled signals and together occupying the total number of addressable elements in the monitor.

As a new image was read-out the corresponding reduced signal was written into the first location of the fifo and the data in the other locations were shifted, the first read-in signal was dropped. Then a new signal representing a new mosaic type image was composed, fed to the frame buffer of the preview monitor and displayed.

Display of the images on the preview monitor(s) was followed by mapping of signal values (in this case log exposure) values into corresponding density values according to a specified gradation mapping curve and the image signal was passed to a laser recorder for hard copy recording.

Occacionally this mapping can be preceded by additional signal processing such as contrast enhancement processing.

## Claims

1. A method of displaying on a display device a number of radiation images, each being represented by a digital signal representation, by deducing reduced image signals from the digital signal representations of said radiation images, and by forming a composed signal representing a mosaic type image by means of said reduced image signals and by applying said composed signal to said display device, characterised in that
i) a reduced image signal is obtained by
- decomposing a digital signal representation of an image into a sequence of detail images at multiple resolution levels and a residual image at a resolution lower than the minimum of said multiple resolution levels,
- modifying pixel values of said detail images to yield pixel values of a set of modified detail images by means of at least one non-linear monotonically increasing odd mapping function with a slope that gradually decreases with increasing argument values and
- computing a processed image by applying a reconstruction algorithm to the modified detail images up to an intermediate level of said multiple resolution levels and to the residual image, the reconstruction algorithm being such that when applied to the unmodified detail images and the residual image said original image or a close approximation thereof would be obtained, and
ii) as a new reduced signal is deduced, said composed signal is amended by means of said new reduced signal so that at least one of the images of the mosaic type image is replaced by an image represented by said new reduced signal.

2. A method according to claim 1 wherein successive resolution levels of said multiple resolution levels differ by a factor equal to 2.

3. A method according to claim I wherein successive resolution levels of said multiple resolution levels differ by a factor equal to 2 and detail images at each resolution level are calculated by filtering an image with at least one low pass filter and by sub-sampling the resulting image by a factor 2.

4. A method according to claim 3 wherein filtering is performed by means of with at least one filter having a Gaussian distribution.

5. A method according to claim 1 wherein a new image replaces the image in the mosaic type image that has been displayed for the longest period of time.

6. A method according to claim 1 wherein said digital signal representation of a radiation image is obtained by scanning a photostimulable phosphor screen wherein a radiation image has been stored with stimulating irradiation, detecting the light emitted upon stimulation and converting said light into a digital signal representation.

## Patentansprüche

1. Verfahren zum Darstellen einer Anzahl von Strahlungsbildern auf einer Anzeigevorrichtung, wobei jedes Strahlungsbild durch eine Digitalsignaldarstellung dargestellt wird, durch Ableiten von Signalen verkleinerter Bilder aus den Digitalsignaldarstellungen besagter Strahlungsbilder, und durch Bilden eines zusammengesetzten, ein mosaikartiges Bild darstellenden Signals mit Hilfe besagter Signale verkleinerter Bilder und durch Anlegen besagten zusammengesetzten Signals an besagte Anzeigevorrichtung, dadurch gekennzeichnet, daß
i) ein Signal für ein verkleinertes Bild erhalten wird durch
- Zerlegen einer Digitalsignaldarstellung eines Bildes in eine Folge von Detailbildern mit mehreren Auflösungshöhen und ein Restbild mit einer Auflösung, die unter dem Minimum der besagten mehreren Auflösungshöhen liegt,
- Modifizieren der Bildpunktwerte der besagten Detailbilder, damit sich mit Hilfe mindestens einer nichtlinearen, monoton ansteigenden, ungeraden Abbildungsfunktion mit einer Neigung, die bei ansteigenden Argumentwerten allmählich abnimmt, Bildpunktwerte einer Menge modifizierter Detailbilder ergeben und
- Berechnen eines verarbeiteten Bildes durch Anwendung eines Rekonstruktionsalgorithmus auf die modifizierten Detailbilder bis zu einer Zwischenhöhe besagter mehrerer Auflösungshöhen und auf das Restbild, wobei der Rekonstruktionsalgorithmus derart ist, daß bei seiner Anwendung auf die unmodifizierten Detailbilder und das Restbild das besagte Originalbild bzw. eine weitgehende Annäherung daran erhalten wird, und
ii) beim Ableiten eines neuen Signals des verkleinerten Bildes besagtes zusammengesetztes Signal mit Hilfe des besagten, neuen Signals des verkleinerten Bildes derart geändert wird, daß mindestens eines der Bilder des mosaikartigen Bildes durch ein Bild ersetzt wird, das durch besagtes, neues Signal des verkleinerten Bildes dargestellt ist.

2. Verfahren nach Anspruch 1, wobei aufeinanderfolgende Auflösungshöhen der besagten mehreren Auflösungshöhen sich um einen Faktor gleich 2 unterscheiden.

3. Verfahren nach Anspruch 1, wobei aufeinanderfolgende Auflösungshöhen der besagten mehreren Auf lösungshöhen sich um einen Faktor gleich 2 unterscheiden und Detailbilder hei jeder Auflösungshöhe durch Filtern eines Bildes mit mindestens einem Tiefpaßfilter und durch Unterabtastung des entstehenden Bildes um einen Faktor 2 berechnet werden.

4. Verfahren nach Anspruch 3, wobei das Filtern mit Hilfe mindestens eines Filters mit einer Gaußschen Verteilung durchgeführt wird.

5. Verfahren nach Anspruch 1, wobei in dem mosaikartigen Bild das Bild, das am längsten dargestellt worden ist, durch ein neues Bild ersetzt wird.

6. Verfahren nach Anspruch 1, wobei besagte Digitalsignaldarstellung eines Strahlungsbildes durch Abtasten eines lichtanregbaren Leuchtschirms, in dem ein Strahlungsbild durch anregende Bestrahlung gespeichert worden ist, durch Erfassen des bei Anregung abgegebenen Lichts und durch Umwandeln des besagten Lichts in eine Digitalsignaldarstellung erhalten wird.

## Revendications

1. Méthode d'affichage sur un équipement de visualisation d'un certain nombre d'images radiologiques, chacune étant représentée par la représentation d'un signal numérique, en déduisant des signaux d'images réduites à partir des représentations de signaux numériques desdites images radiologiques, et en formant un signal composé représentant une image en mosaïque au moyen desdits signaux d'images réduites, et en appliquant ledit signal composé audit équipement de visualisation, caractérisée en ce que :
i) un signal d'image réduite est obtenu par
- décomposition de la représentation sous forme d'un signal numérique d'une image en une séquence d'images simplifiées à des niveaux de résolution multiples et une image résiduelle d'une résolution inférieure au minimum desdits niveaux de résolution multiples,
- modification des valeurs de pixels desdites images simplifiées pour produire des valeurs de pixels d'un ensemble d'images simplifiées modifiées au moyen d'au moins une fonction d'étalonnage impaire à croissance monotone non linéaire avec une pente qui décroît progressivement lorsque les valeurs des arguments croissent et
- calcul d'une image traitée en appliquant un algorithme de reconstruction aux images simplifiées modifiées jusqu'à un niveau intermédiaire desdits niveaux de résolution multiples et à l'image résiduelle, l'algorithme de reconstruction étant tel que lorsqu'on l'applique aux images simplifiées non modifiées et à l'image résiduelle, on obtienne ladite image originelle ou une image très approchante, et
ii) lorsqu'un nouveau signal réduit est déduit, ledit signal composé est modifié au moyen dudit nouveau signal réduit de manière telle qu'au moins une des images de l'image en mosaïque soit remplacée par une image représentée par ledit nouveau signal réduit.

2. Méthode suivant la revendication 1, dans laquelle des niveaux de résolution successifs desdits niveaux de résolution multiples diffèrent d'un facteur égal à 2.

3. Méthode suivant la revendication 1, dans laquelle des niveaux de résolution successifs desdits niveaux de résolution multiples diffèrent d'un facteur égal à 2 et des images simplifiées à chaque niveau de résolution sont calculées en filtrant une image avec au moins un filtre passe-bas et en sous-échantillonnant l'image résultante d'un facteur de 2.

4. Méthode suivant la revendication 3, dans laquelle le filtrage est réalisé au moyen d'au moins un filtre ayant une distribution gaussienne.

5. Méthode suivant la revendication 1, dans laquelle une nouvelle image remplace, dans une image en mosaïque, l'image qui a été affichée pendant la durée la plus longue.

6. Méthode suivant la revendication 1, dans laquelle ladite représentation sous forme d'un signal numérique d'une image radiologique est obtenue par balayage d'un écran à phosphore photo-stimulable sur lequel une image radiologique a été stockée, par un rayonnement de stimulation, détection de la lumière émise suite à cette stimulation et conversion de ladite lumière en une représentation d'un signal numérique.
